# EUROPEAN PATENT SPECIFICATION

(11) **EP 3 719 599 B1**
(45) Date of publication and mention of the grant of the patent: **19.07.2023**
(21) Application number: 20166453.9
(22) Date of filing: 27.03.2020
(51) Int. Cl.: G05B 19/418, G06F 11/20, G06F 11/16

(54) **NETWORK-DISTRIBUTED PROCESS CONTROL SYSTEM AND METHOD FOR MANAGING REDUNDANCY THEREOF**
NETZWERKVERTEILTES PROZESSSTEUERUNGSSYSTEM UND VERFAHREN ZUR VERWALTUNG VON REDUNDANZ
SYSTÈME EN RÉSEAU DISTRIBUÉ DE COMMANDE DE PROCESSUS ET PROCÉDÉ DE GESTION DE LA REDONDANCE

(30) Priority: 02.04.2019 HU 1900105; 06.02.2020 HU 2000042
(43) Date of publication of application: 07.10.2020
(73) Proprietor: Gamma-Digital Kft., 1029 Budapest (HU)
(72) Inventor: Szoke, Máté, 1142 Budapest (HU)
(74) Representative: Kereszty, Marcell

(56) References cited:
- EP-A1- 3 438 829
- US-A1- 2004 001 449
- US-A1- 2006 056 285
- US-A1- 2006 069 946
- US-A1- 2015 154 079

## Description

### TECHNICAL FIELD

The invention relates to a network-distributed process control system and to a method for managing redundancy in the process control system.

### BACKGROUND ART

Industrial process control systems, for example SCADA (Supervisory Control And Data Acquisition) systems are nowadays often operated over distributed networks, and the software programs are running on local computers and/or on cloud-based virtual machines. A frequent requirement set for distributed networks is that the network should remain in operation even in the case of the failure of a network node. According to the state of the art, redundant network nodes or redundant network devices are applied for mitigating certain types of network failure.

In US 6,742,136 B2, a process control network provided with redundant devices is disclosed, wherein at all times only one of the redundant devices is active, while the other one maintains a communication connection with the other devices, and does not respond to messages until it is switched into active mode. The failure or inaccessibility of the active device is detected by the device's redundant counterpart which then switches to active mode. Because the redundant devices have identical virtual addresses, their commands are executed by the other components of the system independent of which one of the redundant counterparts is the active device. Thus, it is not necessary to reprogram the system when a device fails, and there is also no downtime. Because the messages received from the active device are saved by the redundant device, it always has all the necessary information. The document also discloses a device adapted for configuring all the devices in the network. One of the possibilities for using a virtual address space is the implementation of an abstract address space over Layer 3 of the OSI (Open Systems Interconnection) model, which does not make it easier to perform the tasks related to redundancy. Thus, only a single separate layer is applied for addressing the problems related to redundancy, which in many cases may limit the solution of certain task-specific redundancy problems. Another possibility for applying a virtual address space is using IP multicast. In this case, the communications channel cannot be operated via a reliable TCP (Transmission Control Protocol) connection, only by applying UDP (User Datagram Protocol); however, UDP does not guarantee that the packet arrives at the destination, so this solution should be avoided in industrial networks. With an IP multicast solution, the checks implemented in TCP would thus have to be additionally implemented over Layer 4 of the OSI model.

In US 7,424,640 B2, a method providing a fault-tolerant operation of a network-distributed system is disclosed. The system comprises active nodes, standby nodes adapted for acting as replacements of the active nodes, and supervisory nodes. The supervisory nodes are adapted for supervising the operation of the active nodes, and for transferring their tasks to a standby node in the event of failure, with the standby node also being able to detect the failure of the active node, in which case it can either become an active node, or can ask for feedback on the status of the active node. To ensure the secure operation of the system the supervisory node also has at least one redundant counterpart. The standby nodes can replace any active node, because all the nodes utilize a common set of data, with the nodes being authorized for utilizing specific pieces of the data set based on the roles they were assigned upon the initialization of the system. The disadvantage of this technical solution is that each node maintains two separate communication channels, one of which is adapted for providing communication between the redundant nodes, while the other channel is applied for communication with the rest of the network. In case only the communication channel applied for communication with the rest of the network fails, the node thus isolated from the network remains capable of reacting to requests received via the communication channel adapted for communication between redundant nodes, but it cannot perform its network functions any more. This leads to the late detection of the fault and to the disintegration of the network.

The technical solutions according to US 7,818,615 B2 and US 2006/0056285 A1 provide a fault-free operation of a network-distributed process control system by applying redundant hosts. In addition to the primary network, the members of the redundant host pairs are in communication with each other via an additional channel that is also applied for the synchronization of the spare hosts such that they can take over the role of an active host in the event of failure. In the solution according to US 7,818,615 B2, the active host is adapted to detect its own failure, so it can send a message to the spare host to take over its tasks, and the spare host also receives the buffered process control history of the active host during the synchronization process. In addition to the above, US 2006/0056285 A1 also contains teaching for establishing redundancy, and also discloses that the messages indicating a failure are always sent by the active host. These technical solutions also have the disadvantage that by maintaining the communication channel between the members of the redundant host pairs fault detection can be delayed, and the network can disintegrate.

In the document entitled "Communication network dependencies for ICS/SCADA Systems" published by ENISA (the European Union Agency for Cybersecurity, formerly: European Network and Information Security Agency) the security, primarily the cybersecurity, of SCADA networks is addressed. Chapter 6 of the document presents the constraints and risks related to the security of the communication networks of SCADA systems, among them the issue of the replacement of particular devices (6.1.1 Device replacement). The document underlines that the issue of device replacement is preferably addressed in the design and testing phase, otherwise the device replacement process can also be a weakness of the system that could lead to an increased risk for the overall system operation. However, the document gives no teaching concerning the secure implementation of device replacement, for example, the features and parameters of the replacement devices, and the conditions they have to comply with, and also does not disclose the configuration of general-purpose nodes for performing a special function or for executing a selected network role. Regarding to network communication, the document does not address either the features of the communication links between the network nodes, or the content of the communication. In particular, the document does not disclose a communication implemented by heartbeat messages, or such communication wherein the heartbeat message contains a version number of a current node configuration of a node.

In Chapter 7 of the ENISA document, good practices related to the security of SCADA systems are summarized, however, it does not contain teaching concerning feasible or preferable implementation thereof. In sub-chapter 7.2 it is disclosed that for the sake of security it is reasonable to trace the structure of the network, which involves preparing an asset inventory that includes devices, network connections and users, while a proper configuration management is also required. According to the teaching contained in the subsection "Configuration management", default configuration settings can be dangerous for the system. Thus, the document essentially teaches against the application of general-purpose nodes, because such general-purpose nodes necessarily have some kind of default, uniform settings. The document therefore does not disclose either general-purpose nodes or a software that runs on general-purpose nodes and enables them to fulfil any network role, to receive node configurations, and to operate according to a received node configuration.

In sub-chapter 7.9 of the document, guidelines for providing the security of network communication are set forth, without concrete examples of implementation, i.e. the disclosure does not mention synchronization between the configuration nodes for providing identical operation, or the steps of implementing synchronization. The document does not refer to synchronization being applied for providing identical operation even in the case of other node types, i.e. the document contains no teaching as to the possibility that the redundant nodes of data acquisition, data processing and/or data archiving nodes can be redundant nodes operating in master mode which are in synchronized connection with the corresponding data acquisition, data processing and/or archiving node.

A figure illustrating a schematic structure of a SCADA system adapted for controlling the power supply of an urban underground system can be retrieved from the website of LOT Group (https://lotgroup.eu/product/rail-transport/scada/), the more detailed description of the system being included in the publication entitled "A Review of the Product Offering for the Rail Transport" (see pp 15-16), by the same company. The SCADA system disclosed on the website and in the publication has a hierarchical structure, wherein the system is structured to substations as opposed to a structure based on roles/functions, wherein the nodes of the particular substations adapted for data acquisition are not in a direct connection with the data acquisition nodes of other substations. On the substation control level, spare controllers are also applied, but the technical implementation of configuration distribution and redundancy management, for example the process of detecting a controller failure and putting into operation the spare controller as a replacement, and the management of such failures or other momentary disturbances are not addressed by the publication. The term "spare node" is generally (see for example US 7,424,640 B2) applied to refer to such passive or slave-mode nodes that are switched to active or master mode only in the case of the failure of the primary node. The document contains no teaching on spare nodes operating in master mode.

The website of the LOT Group and the publication by the same company do not disclose such a general-purpose node that could be configured to operate as an arbitrary node of the system. The website and the publication do not address the details of the runtime redundancy of the system, either on the level of the controllers, or on the level of data acquisition units (cubicles), so the details of the communication between the nodes, with a special regard to the propagation of configurations, are also not disclosed.

Given that the ENISA publication addresses the cybersecurity of networks, and the documents of the LOT Group are general, marketing-type materials, there is no reason for combining these documents as far as the management of the redundancy of a network-distributed process control system is concerned. Moreover, the above detailed shortcomings are present when the ENISA publication and the website of the LOT Group are considered themselves, respectively, thus even by combining the documents, a system comprising nodes prepared from general-purpose nodes through configuration cannot be provided, and such a system wherein at least two of the nodes adapted for storing network configuration and for assigning node configurations are synchronized with each other to provide their identical operation also cannot be provided, and, furthermore, such a system wherein the general-purpose nodes run a software that is adapted for receiving the node configuration from a node assigning node configurations and for controlling operation based on the received configuration also cannot be provided. Likewise, a method adapted for managing the redundancy of network nodes storing the network configuration and assigning the node configurations in a process control system also cannot be provided by combining the disclosures of the documents.

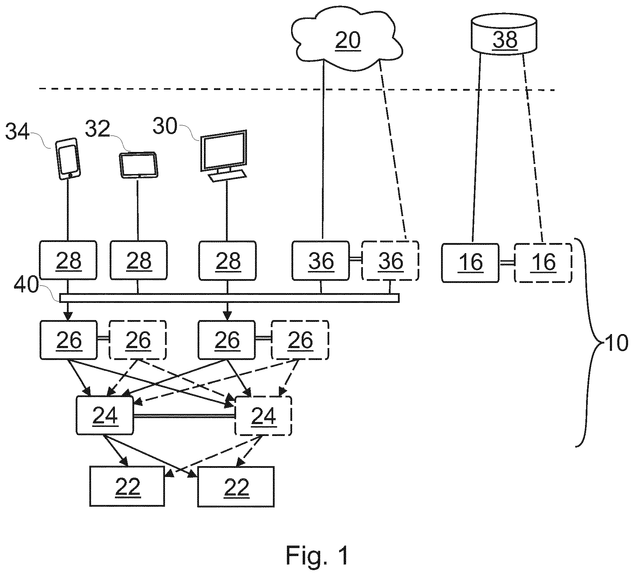

US 2015/0154079 A1 discloses a distributed computing system having supervisors, dependency managers, node managers and other modules distributed over a suitable number of nodes. According to Fig. 1, the dependency managers and the node managers are operated independently and communicate independently with the supervisor. According to paragraph 42, the dependency manager contains not only metadata (such as a configuration), but even the data themselves.

### DESCRIPTION OF THE INVENTION

In light of the known technical solutions, there is a need for a process control system wherein any system node, even a node adapted for storing configuration data that are critical for the operation of the system, has at least one redundant counterpart, and wherein any node can be immediately identified upon its failure or becoming inaccessible, and can be replaced without causing system downtime, and such a replacement can be performed by any person, i.e. even unskilled personnel, so there is no need for hiring skilled personnel for the maintenance of the system. There is also a need for a process control system in which the nodes can be flexibly configured for performing the desired network roles. Furthermore, there is a need for a method adapted for managing redundancy of the nodes in the system implemented according to the above.

The object of the technical solution according to the invention is to provide a process control system and a method for managing redundancy of the system that eliminate the drawbacks of prior art solutions to the greatest possible extent.

The primary object of the invention is to provide a process control system wherein the redundancy of the nodes adapted for storing the configuration data of the system is implemented ensuring an uninterrupted, continuous operation of the system.

Another object of the invention is to provide a process control system wherein the nodes can be flexibly configured for performing the desired network roles.

A further object of the invention is to provide a system wherein the individual nodes, even the nodes storing the configuration data of the system, can be replaced in case of a failure, even without the intervention of skilled personnel, while maintaining the continuous operation of the system.

A still further object of the invention is to provide a method adapted for managing redundancy of the nodes adapted for storing the configuration data of the system, and thus for ensuring a continuous operation of the system.

The objects according to the invention have been achieved by the system according claim 1 and by the method according to claim 11.

Preferred embodiments of the invention are defined in the dependent claims.

As it is emphasised in the ENISA document described hereinabove in the section on the background art, the replacement of a network component, for example a network node, can have negative effects on the operation of the entire system, and can even jeopardise the correct operation thereof. The present invention therefore discloses a system in which uninterrupted, correct operation is provided by the design of the system, even in the event of the failure and replacement of any network node.

The advantage of the system according to the invention is that any node thereof can be replaced, without requiring skilled personnel, in case it fails or becomes inaccessible, while the system remains in operation continuously, in an undisturbed manner, because the general-purpose nodes used in the invention are prepared to be replacements for any type of network node, so they can be simply plugged in as a replacement for any node. This feature also improves the availability of the system.

A further advantage of the system according to the invention is that, although after their configuration the general-purpose nodes are only capable of performing the network tasks corresponding to the given node configuration, but by modifying the node configurations it is possible for them to perform additional network tasks. The concept of the system according to the invention is opposite to the technical solution customary in the field wherein each node is configured for performing all of the possible network roles, and then the unused roles are disabled (see the ENISA document, point 17, section 7.9, "Disable unused ports and services"). It is preferable if it is not possible to enable a general-purpose node, or the operative node prepared from it through configuration to perform - for example by removing a prohibition - tasks that are not included in the node configuration of the given node. This greatly improves the safety of operation of the system according to the invention.

The advantages of the system according to the invention also include that by applying general-purpose nodes a flexibly configurable system is produced, where any node can be configured to perform any network task, while the network tasks can be reassigned or redistributed simply by modifying the configuration.

It has been recognised that the redundancy of the nodes storing the configuration data can be realized, by providing an appropriate synchronization between said nodes, such that each node storing configuration data operates actively, i.e. in master mode. In such a way, the nodes that become unable to perform their function or fail are still capable of continuous, uninterrupted operation without a system shutdown or reprogramming, and it is not necessary to reallocate the functions of the failed nodes to other nodes, and thus the system is less sensitive for the time and method of detecting a failure.

The advantages of the invention also include that, by including in the system multiple nodes adapted for storing configuration data, the security of the system is enhanced both in relation to erroneous configuration settings and malicious interventions, because due to the inclusion of multiple configuration nodes only such configurations are accepted by the nodes of the network that are synchronized across all configuration nodes.

### BRIEF DESCRIPTION OF THE DRAWINGS

Preferred embodiments of the invention are described below by way of example with reference to the following drawings, where
Fig. 1 shows a structure of an exemplary network-distributed process control system having redundant nodes that include redundant configuration nodes,
Figs. 2A and 2B illustrate a preferred realization of assigning/distributing network roles in the system according to the invention,
Figs. 3A-3F show preferred realizations of steps for managing redundancy of the configuration nodes in the system according to the invention,
Fig. 4 illustrates a preferred realization of the connection of the configuration node to a computing cloud,
Fig. 5 shows another preferred implementation of the system according to the invention, illustrating preferred steps of realizing the editing of network configuration,
Fig. 6 shows the system according to Fig. 5, illustrating a preferred implementation of the steps of a method related to saving the modified network configuration, and
Fig. 7 shows the system according to Fig. 5, illustrating a preferred implementation of the steps of the method related to executing the modified network configuration.

### MODES FOR CARRYING OUT THE INVENTION

In the figures, components with the same functions are designated by the same reference numerals, however, the concrete implementation of these may differ from each other.

Fig. 1 depicts the schematic structure of an exemplary network-distributed process control system. The system comprises operative nodes 10 forming a network that is operatively defined by a network configuration, where each operative node 10 has a node configuration defining its network role, i.e. it is configured for performing one or more network roles. The node configurations of the operative nodes 10 altogether constitute the network configuration. The operative nodes 10 are created by configuring general-purpose nodes connected to the network, the operation of the operative nodes 10 being determined by the network role assigned to them upon their configuration. Each general-purpose node is configured to only perform the network role corresponding to the given operative node 10, i.e. the general-purpose nodes are not configured for performing other network roles that are not required for the operation of the operative nodes 10. The operative nodes 10 are designed for receiving further node configurations, or updates to the node configurations, in the course of which they can be configured to perform novel network roles, their operation in the network being determined always by the latest received node configuration.

In a preferred realization according to the invention, the network of the distributed process control system is implemented on one or more interconnected devices with computing capacity. The computing device can for example be a computer, for example industrial computer, personal computer, laptop, tablet, more preferably an IoT (Internet of Things) device.

IoT devices are small-size devices with computing capacity that preferably allow any general embedded operating system to be run on them. IoT devices can also be utilized in industrial environments, because they can be mounted on DIN rails and in industrial enclosures for connection to industrial networks, so they can be preferably applied as the operative nodes 10 of a process control system. IoT devices typically do not have peripherals or display units, so they often have the disadvantage that they have to be managed by specially trained personnel, because maintenance personnel cannot access them. In contrast to that, when they are applied in the system according to the invention, professional assistance is not required for replacing failed IoT devices, which reduces downtime and increases availability.

The devices with computing capacity that are utilized in the system according to the invention are required to have the computing power that is sufficient for performing the network roles, i.e. a sufficiently high clock frequency and a sufficiently high amount of memory (for example, RAM), and are required to be capable of running an operating system and platform software on their own. The term "platform software" is understood to mean any and all software that is installed on the general-purpose nodes and enables the general-purpose nodes to assume and perform any the network roles that occur in the network. Thus, after configuration, a general-purpose node is capable of performing any network role. Preferably, the general-purpose nodes have an identical platform software, which allows for an even simpler management of the general-purpose nodes.

The general-purpose nodes are preferably preconfigured by applying a unique network address, preferably a static IP address. Due to the preconfigured IP address of the general-purpose nodes, when a new general-purpose node is connected to the network, its IP address does not conflict with the IP address of any other node. The IP addresses can be preferably physically written onto the devices with computing capacity implementing the general-purpose nodes. Then, in case the devices are connected to the network, the operator specifies or updates these IP addresses in the system.

In order to improve the security of the system, the preconfigured general-purpose nodes preferably possess security certificates, the security certificates being generated for their preconfigured unique network address. Preferably, the respective certificates of all the operative nodes 10 and preconfigured general-purpose nodes are recorded in the system, preferably as a part of the network configuration. Before starting the configuration process of the general-purpose nodes, and when communication is initiated between the operative nodes 10, the certificates are preferably also verified, i.e. communication is established only if the appropriate certificates exist.

Upon initialization, the system typically comprises only one computing device, which computing device is configured for performing one or more network roles. After connecting and configuring further devices with computing capacity, the network of the system is created. Preferably, those network nodes that are critical for the operation of the system, for example, the redundant nodes adapted for storing network configuration data and performing configuration assignment/distribution tasks are implemented on separate devices with computing capacity, such that the failure of a particular computing device results in the loss of only one network node.

By way of example, the network of the process control system according to the invention is implemented such that each network role of the network is implemented on a separate respective computing device, i.e. each device with computing capacity performs a single network role.

In another example, the network of the process control system according to the invention is implemented such that a number of the network roles are implemented on separate respective devices with computing capacity, while other network roles are implemented on a combination of more than one units with computing capacity, with still other network roles being implemented collectively on a single respective computing device.

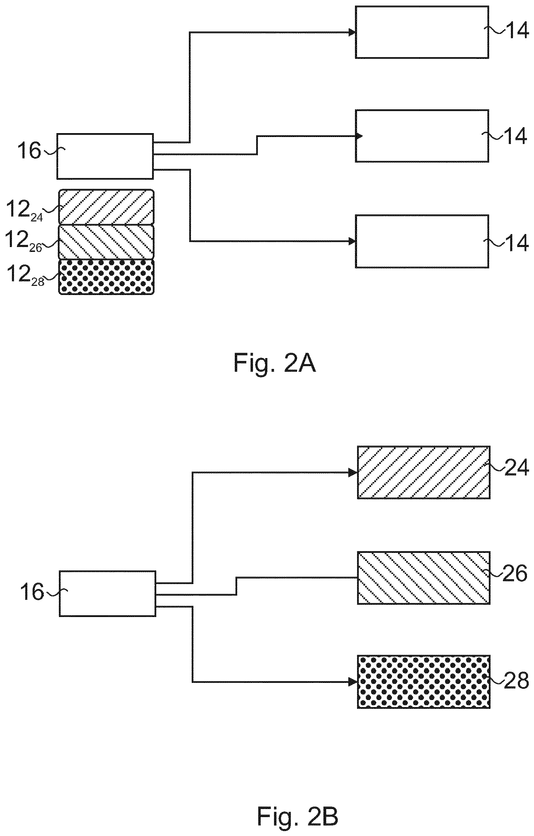

For example, possible network roles are data acquisition, data processing, the display, storage, or archiving of data, and the assignment (in other word: distribution) of network roles. The distributed network roles are realized by the configured operative nodes 10. The operative nodes 10 are able to perform only those network roles for which they have been configured. The operative nodes 10 are implemented by configuring general-purpose nodes; the preferred steps of the configuration process are illustrated in Figs. 2A and 2B.

Some of the operative nodes 10 of the system preferably have a redundant counterpart in order to increase the availability of the system, and to reduce the downtime caused by failures. The redundant counterparts of the operative nodes 10 are shown in dashed outlines in Fig. 1, while redundancy is indicated by double lines interconnecting the redundant nodes.

In the preferred embodiment according to Fig. 1, the system comprises PLCs 22 (Programmable Logic Controllers) that for example perform industrial process control tasks. Data acquisition nodes 24 are connected to the PLCs 22, which data acquisition nodes 24 are operative nodes 10 configured preferably for performing data acquisition tasks and communications tasks. In the preferred embodiment according to the figure, two data acquisition nodes 24 that form a redundant component pair are connected to the PLCs 22, where redundancy is implemented by any applicable technical solution, for example by a technical solution known in the prior art.

In the preferred embodiment according to Fig. 1, data processing nodes 26 are connected to each of the data acquisition nodes 24. The data processing nodes 26 are operative nodes 10 that are configured for processing and evaluating data made available to the network by the data acquisition nodes 24. The data processing nodes 26 are preferably implemented such that they are able to generate and transmit error signals. The data and the error signals processed by the data processing node 26 can be retrieved, displayed and can also be stored.

The system according to Fig. 1 comprises two active data processing nodes 26 operating in master mode, each of which has a redundant counterpart. In the case of the data processing nodes 26, and also in the case of the data acquisition nodes 24, redundancy can be implemented by any applicable technical solution, even a technical solution known from the prior art, for example by a master-slave setup.

Processed data are preferably displayed by means of view nodes 28 that are operative nodes 10 configured for data display and data access tasks. The HMI (human-machine interface) functions of the network, for example functions like modifying the settings and the network configuration of the system, can preferably be accessed via the view nodes 28.

The data processing nodes 26 and the view nodes 28 are preferably in a logical connection; in the preferred embodiment according to Fig. 1 they are connected to a bus 40 that is adapted for implementing the logical connection.

The display of data preferably also involves the application of a graphical user interface (GUI). The graphical user interface is preferably connected to the view node 28, for example to a web server adapted for implementing the view node 28, or to the device(s) with computing capacity adapted for implementing the view node 28, providing access to system data by means of the display monitor thereof.

Preferably, at least one of the following functions can be accessed utilizing the graphical user interface:
- network overview,
- status check of the operative nodes 10,
- identification of failed operative nodes 10,
- management of network identifiers of the operative nodes 10 and of the general-purpose nodes connected to the network,
- confirmation of the node configuration received by the operative nodes 10, and
- initialization of the general-purpose nodes connected to the network.

Preferably, several different views - that for example provide different levels of access to the system - can be set on the graphical user interface. The graphical user interface can be preferably set as:
- a developer view, wherein engineers can for example modify the network configuration of the system, including the node configuration of the operative nodes 10; this view requires special access permissions, and can be preferably accessed and edited simultaneously by multiple engineers,
- a maintenance view, wherein information related to the maintenance of the system can be displayed with limited possibility for modification; preferably only the name and the network path or IP address of the operative nodes 10 can be changed, and
- an operator view, wherein the operator of the plant or industrial facility created in the developer view can intervene in the operation of the entire system or certain components thereof.

The above functions are preferably performed by the graphical user interface in a simple, straightforward manner that is easily comprehensible even by non-specially trained operator or maintenance personnel.

A request for displaying the processed data can be initiated from any device that is capable of displaying data, for example a computer 30, a tablet 32 and/or a mobile phone, preferably a smartphone 34. The request can be initiated utilizing the graphical user interface and/or utilizing a command-line interface. The devices adapted for displaying data are connected to a view node 28 of the network, and query the processed data from the data processing node 26 via the view node 28. The view nodes 28 are also adapted for managing the data access and modification permissions of the devices capable of displaying data. Preferably, the permission for data access and modification is granted by the view node 28 only after authentication, and, on the other hand, data access is also limited based on the network identifier and on geolocation.

If the system comprises more than one view nodes 28, then, on the one hand, the scope of the data accessible through the different view nodes 28 may differ from each other, and on the other hand, different access and modification permissions can be granted in relation to the same network data.

By way of example, permission for modifying certain network data and settings is granted by the view nodes 28 of the system only if the related query was received from a physical portion of the system.

In another example, different particular view nodes 28 allow access to different network data, for example, the modification of the network configuration of the system is only allowed from certain designated view nodes 28 provided that the required permissions are present.

The view nodes 28 are implemented preferably as a server, more preferably as an HTTP server. They provide access to system data, preferably to data and error signals provided by the processing nodes 26 and to the network configuration of the system, for one or more devices capable of displaying data. The devices capable of displaying data can be connected to the view nodes 28 as a thin client. In the preferred embodiment according to Fig. 1, the view nodes 28 do not have redundant counterparts. It is preferable to provide the redundancy of the view nodes 28 of the system by applying backup view nodes 28, because due to the different access permissions applied at the different view nodes 28 it is not possible for a particular view node 28 to fully substitute for another (failed) view node 28.

In addition to being queried and displayed, the data processed by the data processing nodes 26 can also be stored. To provide for data storage, archiving nodes 36 are preferably connected to the data processing nodes 26. The archiving node 36 is implemented as an operative node 10 adapted for archiving, storing, or transmitting for storage the data related to the system. In the preferred embodiment according to Fig. 1, the archiving node 36 also comprises a redundant counterpart; redundancy can even be implemented by applying a prior art technical solution.

The archiving node 36 is preferably connected both to the network of the system according to the invention, and to an external network, for example the Internet. In the preferred exemplary embodiment according to Fig. 1, the external network to which the archiving node 36 is connected is a computing cloud 20, in which computing cloud 20 the data related to the system can for example be stored in a database. In Fig. 1, the boundary of the external networks is indicated by a horizontal dashed line. The advantage of data storage on an external network is, among others, easy expandability, however, the interruption of the link to the external network can lead to the data stored in the external network becoming inaccessible.

Data that are critical for the operation of the system preferably have to be stored in a persistent manner, i.e. in non-volatile memory storage, for providing the long-term storage and accessibility of information. Data to be stored persistently include the configuration data of the system, for example the entire network configuration, and also the data related to manufacturing, for example manufacturing parameters, recipes, formulas, or manufacturing history. In case persistent data storage is implemented in an external network, the interruption of the connection to the external network may lead to a system failure, erroneous system operation, or data loss.

Persistent data storage can be implemented in a number of ways. In the following, two implementation examples will be detailed.

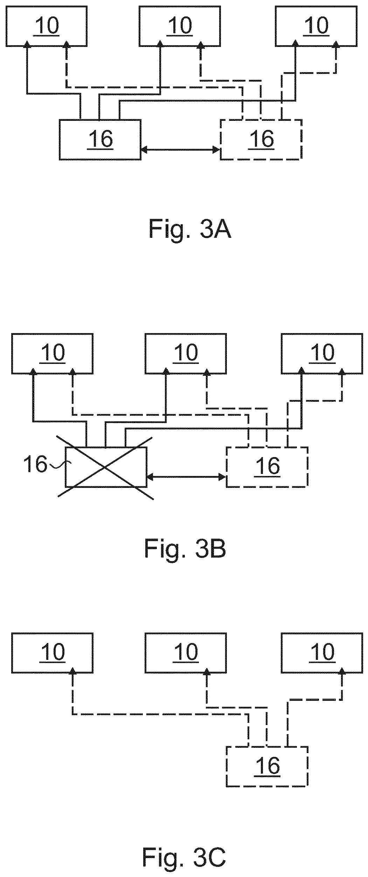

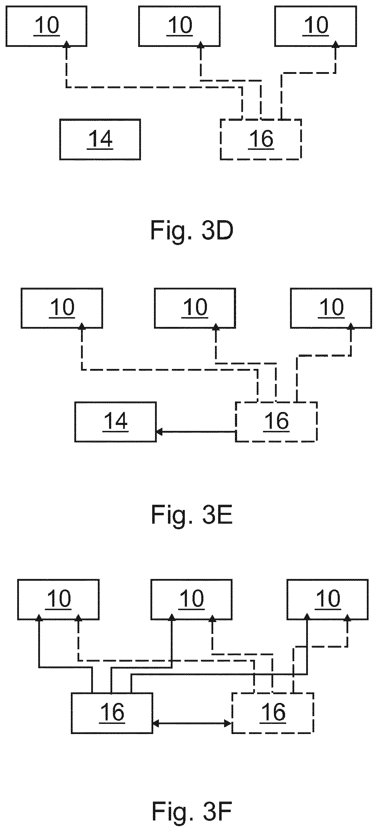

In the first exemplary implementation, those operative nodes 10 that are applied for storing the configuration data of the system have at least one respective redundant counterpart, with a process being utilized for realizing mutual synchronization between the redundant counterparts. A possible implementation of this is shown in Figs. 3A-3F.

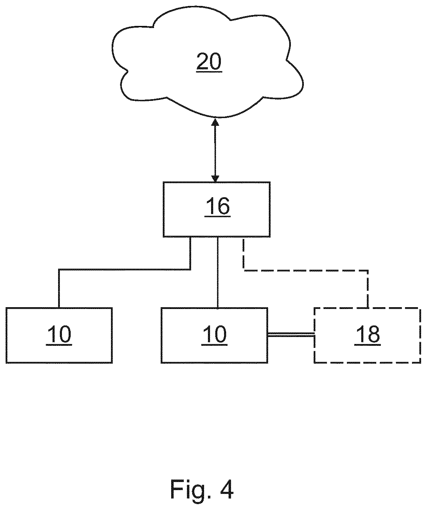

In another example, the manufacturing data are transmitted towards a high-availability external data storage system or network, and are stored therein. Such external data storage means can be for example a computing cloud 20, or a server computer, a server system or a computer cluster of or an external network. An exemplary implementation of such a data storage setup is shown in Fig. 4, wherein the data are transmitted to a computing cloud 20 and are stored therein permanently.

In the preferred embodiment according to Fig. 1, the configuration data of the system are stored in a configuration node 16. Because the configuration data are to be stored in a persistent manner, the system comprises two configuration nodes 16 that are redundant counterparts of each other. The configuration nodes 16 are operative nodes 10 that are originally also general-purpose nodes, and are configured for storing the network configuration of the system, and for assigning the node configuration (network roles) to the operative nodes 10 connected to them. Each of the configuration nodes 16 constituting the redundant counterparts of each other is operated in master mode, i.e. they do not have slave-mode redundant counterparts. The configuration nodes 16 are synchronized with each other to ensure their identical operation, i.e. when modifying the network configuration in a configuration node 16, any further steps are preceded by the synchronization of the modifications, as a result of which all of the configuration nodes 16 are capable of identical operation when possessing identical data. Thanks to the synchronization, any one of the configuration nodes 16 is capable, even on its own, of performing its network role, while maintaining the uninterrupted, error-free operation of the network, so in case one of the configuration nodes 16 becomes unable to fulfil its network role, the other configuration node 16 will remain able to assign and distribute, on its own, the node configurations over the network.

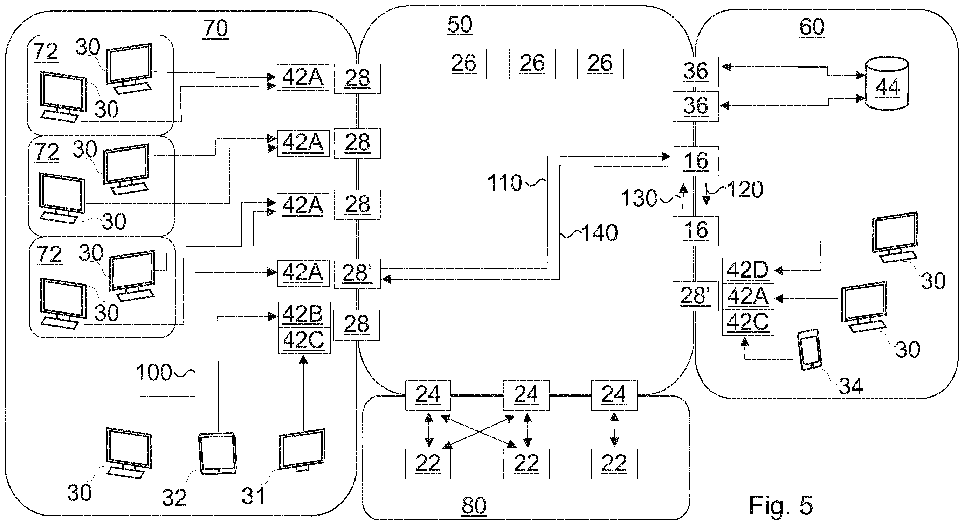

A preferred implementation of the sequence of the steps of the method adapted for managing the redundancy of the configuration nodes 16 of the system is illustrated in Figs. 5-7.

Preferably, more than two configuration nodes 16 can also be included in the system, all of which are adapted for operation in master mode, without a slave-mode redundant counterpart, and are also capable of assigning node configurations.

All the operative nodes 10 of the network are in connection with at least one configuration node 16. For the sake of simplicity and clarity, these connections are not shown in Fig. 1. The operative nodes 10 other than the configuration nodes 16 preferably have only one network connection to the network from which they receive their node configurations and node configuration updates, and thus it is ensured that all operative nodes 10 are informed when an operative node 10 becomes inaccessible. As a result of this, the redundancy of the operative nodes 10 other than the configuration nodes 16 can even be implemented by applying any prior art technical solution, and the network will not disintegrate in case an operative node 10 becomes inaccessible. For managing the redundancy of the data acquisition node 24, the data processing node 26, and the archiving node 36, the solution according to the invention implemented utilizing the configuration nodes 16 can also be applied.

If the system is made up of multiple separate sub-networks having their own configuration nodes 16, then the nodes applied for interconnecting the sub-networks preferably have a respective network connection to each of the sub-networks.

The configuration nodes 16 are preferably in connection with a version tracking repository 38 that is adapted for storing the network configuration history, i.e. the subsequent versions of the network configuration, such that the network configuration utilized for the system can be traced back to an arbitrary time instant and can be possibly reverted to a version corresponding to that time instant.

In the embodiment according to Fig. 1, the version tracking repository 38 is implemented in an external network, and the configuration nodes 16 store only the current network configuration of the system.

Figs. 2A and 2B illustrate a preferred realization of assigning /distributing network roles 12 in the system according to the invention, in a state wherein the system comprises a network already including at least one operative node 10. During the initialization of the system, for configuring the first operative node 10 a preferably physical connection has to be made to a general-purpose node 14, configuring it (for example utilizing a command line interface) on the one hand for operation as a view node 28, whereby an external access path is produced to the network, and on the other hand, for operating as a configuration node 16 that is adapted for storing and managing the network configuration. Further general-purpose nodes 14 (that can be configured for performing further network roles 12) can be connected to the operative node 10 created this way in the following manner. The general-purpose node 14 connected to the network as the second node thereof is preferably configured by the operative node 10 (which at the time of connection constitutes by itself the entire network) to become a configuration node 16. As the network grows, the network role 12 corresponding to being operated as a configuration node 16 can be transferred from the initial operative node 10 to another operative node 10, or a general-purpose node 14.

In the embodiment according to Fig. 2A, the system comprises three general-purpose nodes 14 connected to a configuration node 16. The general-purpose nodes 14 are functionally identical, all running the platform software that was described above in relation to Fig. 1, and are adapted to fulfil any network role 12 and are also adapted for automatically receiving the node configuration assigned by the configuration node 16 and, based on the received node configuration, for operation as an operative node 10.

The network configuration (that consists of the combination of the node configurations), and preferably the network identifiers and the security certificates of the operative nodes 10 and general-purpose nodes 14 connected to the configuration node 16 are stored by the configuration node 16 preferably in a file and/or in a database. In the exemplary embodiment according to Fig. 2A, the configuration node 16 is adapted for assigning a network role 12₂₄ a network role 12₂₆, and a network role 12₂₈, where the network roles 12₂₄ 12₂₆ and 12₂₈ comprise, respectively, data acquisition tasks, data processing tasks, and display/data access tasks.

The general-purpose nodes 14 are configured by the configuration node 16 by assigning to them the network role 12₂₄, the network role 12₂₆, and the network role 12₂₈ respectively, after which they perform the tasks, as operative nodes 10, according to the received respective network roles 12. After being configured, the general-purpose nodes 14 operate in the network as operative nodes 10, i.e. in the example according to Fig. 2B, as a data acquisition node 24, a data processing node 26, and a view node 28. The data acquisition node 24, the data processing node 26 and the view node 28 remain in contact with the configuration node 16 even after the configurations have been assigned, preferably receiving from it new or updated node configurations and/or further tasks.

Preferably simultaneously with receiving their node configurations, the configured operative nodes 10 also receive the network identifiers of further configuration nodes 16 that are accessible in the network so that they will be able to receive new node configurations or node configuration updates from all configuration nodes 16. The operative nodes 10 - that are in contact with multiple configuration nodes 16 - will accept a new node configuration only in case all node configurations received from the different configuration nodes 16 correspond to a network configuration having the same version number, preferably a network configuration with a version number that is higher than the previous ones, otherwise they do not react to the node configuration received from the configuration node 16 and preferably generate an error message that is displayed by at least one view node 28.

For the sake of simplicity, the redundant counterparts of the configuration node 16, the data acquisition node 24, the data processing node 26 and the view node 28 are not shown in Figs. 2A and 2B.

The data acquisition node 24, the data processing node 26 and the view node 28 preferably perform the tasks described in relation to Fig. 1, and are preferably interconnected in a manner shown in Fig. 1; however, for the sake of clarity, these connections are not shown in the figure either.

When a new general-purpose node 14 is connected to the network, it receives the node configuration from one of the configuration nodes 16 operating in master mode in the system as shown in Fig. 2A, wherein the node configuration to be assigned can be preferably specified through the graphical user interface or command line interface described in relation to Fig. 1, for the configuration node 16 assigning the network roles 12.

Figs. 3A-3F schematically illustrate preferred realizations of the steps applied for managing the failure of a configuration node 16 in the system according to the invention.

Fig. 3A shows a portion of the system, with two configuration nodes 16, and three operative nodes 10 that have been configured by the configuration nodes 16 for performing arbitrary network roles 12. Both configuration nodes 16 operate in master mode, without a redundant counterpart operating in slave mode, and both configuration nodes 16 are in connection with all three operative nodes 10 such that, in the event of one of the configuration nodes 16 becoming inaccessible, the other one can still perform the assigning of node configurations in the network.

Like in Fig. 1, the redundant component of the system and its connections to the other components of the network are shown in dashed lines.

According to the disclosure hereinabove, during the configuration step the operative nodes 10 receive, preferably together with their node configurations, the network identifiers of further configuration nodes 16 of the network, with which they establish a connection that is utilized by the configuration nodes 16 for assigning new network tasks, network roles 12 or for assigning node configuration updates to the operative nodes 10.

A synchronization operation applied for the two configuration nodes 16 is utilized for synchronizing the redundant configuration nodes 16, such that in case one of the configuration nodes 16 becomes inaccessible, the tasks of the configuration nodes 16 are still performed in the network. Synchronisation between the configuration nodes 16 is indicated in Fig. 3A by the bidirectional arrow interconnecting the configuration nodes 16.

In Fig. 3B a case is illustrated in which one of the configuration nodes 16 becomes inaccessible (cannot perform its functions in the network), for example due to a failure. Thanks to the synchronization shown in Fig. 3A, the configuration node 16 still functioning in the network can perform the duties of configuration nodes 16 as before, without downtime, i.e. if necessary, it assigns the node configurations to the operative nodes 10.

After that, the configuration node 16 that has become inaccessible over the network is removed from the system in a step illustrated in Fig. 3C, followed by replacing the removed configuration node 16 with a new general-purpose node 14 in the step illustrated in Fig. 3D. Meanwhile, the remaining configuration node 16 still performs the network roles of the configuration nodes 16, however, it is preferable to carry out the steps illustrated in Figs. 3C and 3D as soon as possible, such that the system is operated with a single configuration node 16 for as short a time as possible. By applying multiple - preferably, at least three - configuration nodes 16 in the system it can be provided that even in case a configuration node 16 becomes inaccessible, at least two other configuration nodes 16 remain in operation in the network in a redundant manner.

In the step according to Fig. 3E, a new general-purpose node 14 is introduced into the system, preferably by maintenance personnel. This general-purpose node 14 is then configured, by the configuration node 16 remaining in the network, for operation as a new configuration node 16, and it also synchronizes the network configuration on the new configuration node 16. During the synchronization process, the network identifiers and security certificates of the operative nodes 10 and the general-purpose nodes 14 are preferably also shared. After it has been configured, the new configuration node 16 also establishes connection with the required operative nodes 10, and then the system returns to the state shown in Fig. 3A, where two master-mode, mutually synchronized configuration nodes 16 are in operation in the network, continually synchronizing/sharing with each other the network configuration.

If more than one master-mode configuration nodes 16 are applied in the network, synchronization is responsible for providing that a modified network configuration - which modified configuration affects the node configuration of one or more operative nodes 10 of the network - is received by all configuration nodes 16, and that all the configuration nodes 16 continue operating in an identical manner. The processes applied for the synchronization between the configuration nodes 16, for editing the network configuration and for executing the modified network configuration are illustrated in more detail in Figs. 5-7. As a result of proper synchronization, all configuration nodes 16 of the network possess an identical network configuration, so it is not necessary to establish active-passive or master-slave relationships between the configuration nodes 16, i.e. all configuration nodes 16 can be operated actively, in master mode.

For the sake of clarity, in Figs. 3A-3F the possibly included redundant counterparts of the operative nodes 10 and the interconnections between the operative nodes 10 are not shown. The particular operative nodes 10 can be nodes configured for any network role 12, for example, data acquisition nodes 24, data processing nodes 26, view nodes 28, archiving nodes 36, the redundant counterparts thereof, or even a further configuration node 16.

A risk to the operation of the network can be present when a malicious intruder creates a configuration node 16, for example by copying the preconfigured network identifier of a general-purpose node 14 when a failed configuration node 16 is being replaced, and then blocks the communication of the general-purpose node 14. In such a case, the intruder creates the impression for the network that it is a general-purpose node 14 waiting to be configured, which is then configured by the operational configuration node 16 of the network as a configuration node 16. From then on, the node created by the intruder will be able to modify the settings of the network, and even to completely disrupt the operation of the system. However, in the network according to the invention, node or network configurations can only be received preferably if a security certificate assigned to the network identifier is present. In case the intruder does not possess the network identifier and/or the security certificate of the general-purpose node 14, the configuration node 16 will not configure the new node, and therefore the network according to the invention is protected from the above described type of attack. Preferably, a precondition for the communication between any two operative nodes 10 of the network can be the checking of the network identifiers and the security certificates, whereby nodes having malicious intent can be prevented from disrupting the operation of the network.

The tasks performed by the configuration nodes 16 may also include, in addition to the storage of the network configuration and the assignment/distribution of the node configurations, also the status tracking of the operative nodes 10. In addition to the version number of the network configuration, the configuration nodes 16 preferably also store the version number of the node configurations of the operative nodes 10. Preferably, the configuration nodes 16 and the operative nodes 10 communicate with each other from time to time by sending heartbeat messages. Sending a heartbeat message is an information exchange event carried out at regular intervals, in the course of which the operative nodes 10 send to at least one configuration node 16, and/or the configuration nodes 16 send to the operative nodes 10, the known version number of the node configuration of the given operative node 10, or the version number of the network configuration corresponding to the node configuration. Preferably, sending heartbeat messages is initiated by the configuration nodes 16, with the heartbeat message containing the version number of the current node configuration of the operative node 10. If the version number of the network configuration and/or of the node configuration of a particular operative node 10 is different at the configuration node 16 and the given operative node 10, the node configuration has to be downloaded or assigned again. By way of example, if an operative node 10 becomes inaccessible on the network only for a short time, or it is restarted, the version number of the network configuration corresponding to the node configuration of the operative node 10 can be smaller than the network version number of the configuration node 16. In such a case, the node configuration corresponding to the current network configuration can be resent to the operative node 10 by the configuration node 16.

Fig. 4 shows a detail of a preferred embodiment of the system according to the invention, wherein a configuration node 16 is in connection with a computing cloud 20 utilized as a high-availability external storage. In the system according to the figure, the configuration node 16 is connected to three operative nodes 10, one of which is the redundant node 18 (redundant counterpart) of one of the operative nodes 10. Like in Fig. 1, the redundant node 18 is shown in dashed lines, while redundancy is indicated by a double line interconnecting the redundant components.

The operative nodes 10 can be nodes adapted to perform any network role 12, for example data acquisition nodes 24, data processing nodes 26, view nodes 28, archiving nodes 36, or a configuration node 16. The redundant node 18 is the redundant counterpart of the corresponding operative node 10, for example in case the operative node 10 is a configuration node 16, then the redundant node 18 corresponding thereto is also a configuration node 16, both of which operate in master mode. Preferably, the redundant node 18 of the data acquisition node 24, the data processing node 26 and/or the archiving node 36 is a redundant node 18 operating in master mode, and is synchronized with the corresponding data acquisition node 24, data processing node 26 and/or archiving node 36 to provide their identical operation, and thereby it is adapted to perform the required network role at all times.

Because the configuration node 16 stores network configuration that preferably comprises data to be stored in a persistent manner, it is expedient if it is adapted for passing on the data for storage to a high-availability network, for example, in the preferred embodiment according to Fig. 4, a computing cloud 20 comprising a database, and also for retrieving the data stored in the computing cloud 20.

Fig. 5 shows another preferred embodiment of the system according to the invention, indicating the steps of the method related to editing the network configuration. In the example according to the figure, the system comprises multiple interconnected networks: a SCADA process control network 50, a corporate network 60, an operator network 70, and an industrial network 80. The networks are preferably interconnected by specific operative nodes 10 of the system according to the invention.

The SCADA process control network 50 comprises data acquisition nodes 24, data processing nodes 26, view nodes 28, archiving nodes 36 and configuration nodes 16 that have already been described in relation to Fig. 1. For the sake of clarity, the interconnections between the operative nodes 10 making up the SCADA process control network 50 and the redundant nodes 18 belonging to the operative nodes 10 are not shown in the figure. Preferably, each of the operative nodes 10 making up the SCADA process control network 50 has only a single network connection to the SCADA process control network 50, and thereby, in case any operative node 10 fails or becomes inaccessible, the failure can be detected at the same time in the entire SCADA process control network 50.

The data acquisition nodes 24 of the SCADA process control network 50 are connected to the PLCs 22 of the industrial network 80. The preferred embodiment according to Fig. 5 comprises a data acquisition node 24 that is connected to one PLC 22, and two data acquisition nodes 24 that are both connected to the same two PLCs 22 and are operated in master mode, as redundant counterparts of each other, in the same way as the configuration nodes 16 in the embodiment according to Fig. 1.

The operator network 70 is connected to the SCADA process control network 50 through view nodes 28. The view nodes 28 are preferably adapted for providing access to the SCADA process control network 50 for the devices in the operator network 70, for example the computers 30, display 31 and tablet 32, through a graphical user interface 42A-42C. The graphical user interface 42A preferably provides general access to the process control system, while the graphical user interface 42B provides access for managing the devices, for example by way of the maintenance view described above in relation to Fig. 1, and the graphical user interface 42C can be utilized for providing a system status overview on a display 31, preferably a screen.

The operator network 70 is connected to the SCADA process control network 50 through view nodes 28, and comprises smaller units, preferably operator areas 72.

In the preferred embodiment according to Fig. 5, three operator areas 72 are implemented in the operator network 70, each of which comprises at least one computer 30 adapted for providing access for the users working in the operator areas 72 to system data, for example to the data acquired by the data acquisition nodes 24 and processed by the data processing nodes 26, through the graphical user interface 42A of the view nodes 28.

One of the view nodes 28 arranged at the boundary between the SCADA process control network 50 and the operator network 70 is implemented as a view node 28' that is configured for allowing the editing of a network configuration, i.e. the editing of the network configuration of the configuration nodes 16 can only be initiated applying the view node 28'.

The system comprises a view node 28', configuration nodes 16 and archiving nodes 36 adapted to interconnect the corporate network 60 with the SCADA process control network 50, wherein the view node 28' is also configured to allow the editing of network configuration, such that, possessing the required permissions, editing of the network configuration can be initiated also from the corporate network 60. General access to system data is provided, for example for a computer 30, by the view node 28' through the graphical user interface 42A, with system data being displayed on a smartphone 34 by the graphical user interface 42C, and an analysis of system data can be performed on the graphical user interface 42D utilizing a computer 30.

In the preferred embodiment according to Fig. 5, a data storage unit 44 that is adapted to be connected to the archiving nodes 36 and is applied, by way of example, for the persistent data storage - preferably utilizing a database - of the manufacturing information of the system is implemented in the corporate network 60.

In relation to managing the redundancy of the configuration nodes 16, Fig. 5 also includes the steps of the method that are related to editing the network configuration.

In an editing step 100, a network connection is made to a selected configuration node 16 for editing the network configuration, followed by retrieving and modifying the current network configuration therefrom. In the preferred embodiment according to Fig. 5, in the editing step 100 a connection is established to the selected configuration node 16 through a view node 28, preferably through an operative node 10 configured as a view node 28' implemented to allow the editing of network configuration.

The view node 28' selects, preferably in a selection step 110, the configuration node 16 to which it will establish connection. The selection of the configuration node 16 can be performed in a random manner, or based on a predetermined order of the configuration nodes 16, said order being for example the order of the configuration nodes 16 in the node configuration of the view node 28' applied for establishing the connection. Because the configuration nodes 16 are synchronized with each other, i.e. they are equivalent with each other, any other selection method can of course also be applied. If a connection to the selected configuration node 16 cannot be established by the view node 28', for example because the given configuration node 16 has become inaccessible, then the selection step 110 is repeated until it can successfully establish a connection to one of the configuration nodes 16.

The configuration node 16 successfully selected in the selection step 110 then verifies, in a verification step 120, the network configuration-editing status of the other configuration nodes 16 of the network, and if there is no other network configuration-editing process underway, then an exclusive network configuration-editing permission is granted by the selected configuration node 16 to the view node 28', while in case there is another network configuration-editing process underway, then no network configuration-editing permission is granted by the configuration nodes 16 until said process has been finished.

In response to the verification step 120, in a status indication step 130 the configuration nodes 16 other than the selected configuration node 16 indicate their network configuration edit status to the selected configuration node 16, i.e. they indicate if they are currently being applied for editing network configuration, and also whether they have granted an exclusive network configuration edit permission to a view node 28'. The verification step 120 and the status indication step 130 are adapted to ensure that all of the modifications made by the users and engineers who can access the network configuration appear in the network configuration, and that it is not possible to overwrite the modifications of a network configuration with a higher version number by the modifications of a network configuration with a lower version number, i.e. it is always the network configuration with the highest version number that is modified during the editing of network configuration.

In case the status indication step 130 indicates that there is no network configuration-editing process underway, then, after granting the configuration-editing permission, the network configuration is sent for editing to the view node 28' by the selected configuration node 16 in a configuration sending step 140. Provided that they all have the required permissions, the network configuration can be edited even by multiple users or engineers at the same time through the graphical user interface 42A of the view node 28'.

Preferably, the communication between the view node 28' and the selected configuration node 16 is encrypted, i.e. in the example according to Fig. 5, the view node 28' and the selected configuration node 16 communicate with each other over an encrypted channel during the selection step 110 and the configuration sending step 140. The communication is preferably encrypted by applying an asymmetric key. This provides improved security compared with symmetric-key encryption, but is slower than that. Asymmetric-key encryption provides that the communication between the view node 28' and the selected configuration node 16 during editing the network configuration is not a time-critical process.

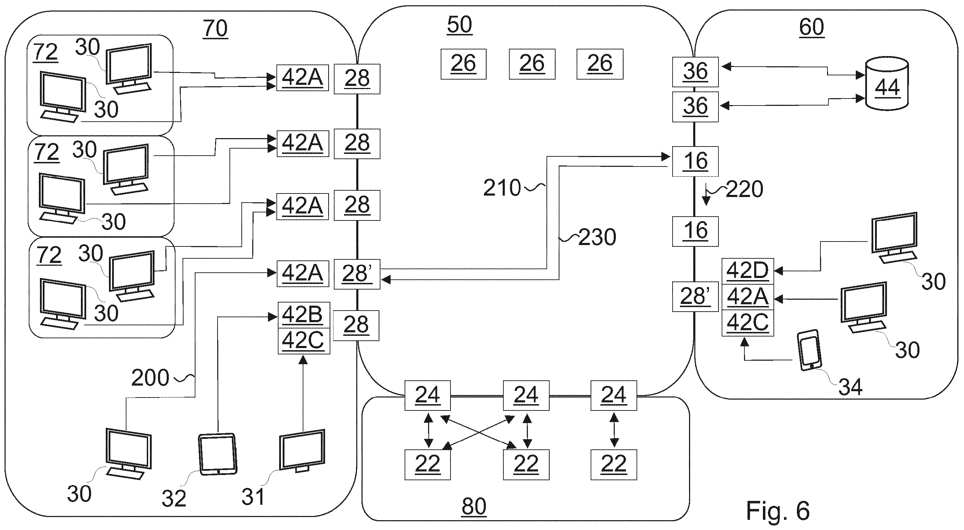

Fig. 6 illustrates the steps of the method related to saving the modified/edited network configuration in the system according to Fig. 5. After editing is finished, the network configuration is saved in a saving step 200. In the saving step 200, the modified network configuration is saved and then uploaded to the selected configuration node 16.

During saving the modified network configuration, in a synchronization step 220 the modified network configuration is shared (synchronized) between the configuration nodes 16, followed by signalling successful synchronization.

Preferably, after modifying network configuration, uploading of the modified network configuration to the selected configuration node 16 is first initiated through the view node 28', and then, in a configuration upload step 210, the modified configuration is uploaded from the view node 28'. Preferably in the configuration upload step 210, when the network configuration is being uploaded, the issued exclusive network configuration-editing permission is returned to the selected configuration node 16, however, in order that identical operation of the configuration nodes 16 remains ensured, new exclusive network configuration-editing permissions are not granted by the configuration nodes 16 until the synchronization step 220 is successfully completed.

Prior to the synchronization step 220, the selected configuration node 16 preferably checks the format of the modified network configuration, and executes the synchronization step 220 only if the modified network configuration has the appropriate format.

Preferably in a save feedback step 230, the selected configuration node 16 sends a feedback to the view node 28' on the successful execution of the saving or on a potential error in the form of an error message.

If a failure of the view node 28' occurs during the editing step 100 or the saving step 200, then, upon detecting the failure, the exclusive network configuration-editing permission of the failed view node 28' is revoked by the selected configuration node 16. Although the network configuration that is being edited and has not yet been saved when the view node 28' fails is lost, the system still remains in normal operation, and editing can be initiated again through another view node 28'.

Preferably, communication between the view node 28' and the selected configuration node 16 related to the saving process is also encrypted, more preferably it is encrypted by applying an asymmetric key, because during the saving process there is sufficient time for carrying out asymmetric-key encryption that provides higher security.

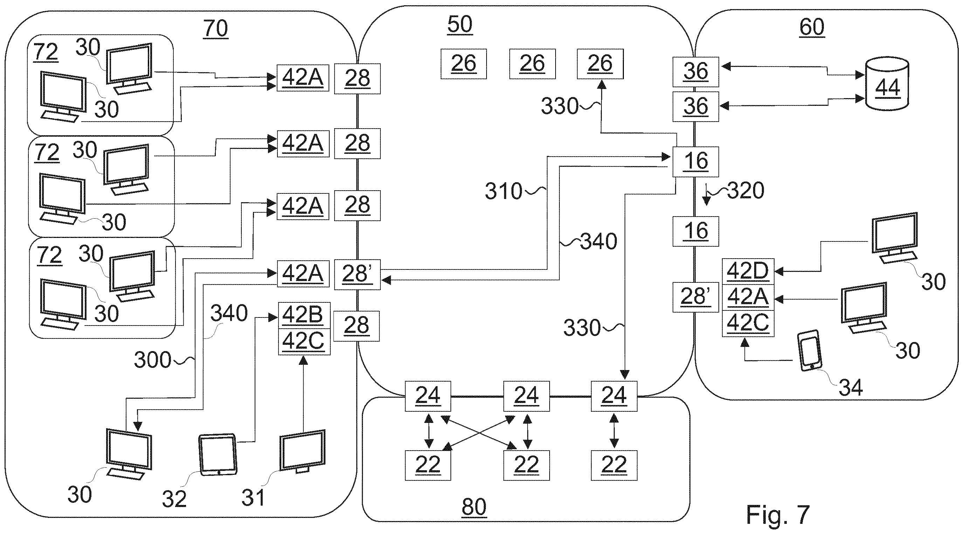

In Fig. 7, the steps of the method related to the execution of the network configuration saved with modifications are illustrated in the system according to Fig.

5. In an execution step 300, a command is sent to the selected configuration node 16 for applying the modified network configuration, based on which the selected configuration node 16 issues a signal to the other configuration nodes 16 for executing the modified network configuration, and subsequently, the configuration nodes 16 are applied for distributing the node configurations corresponding to the modified network configuration to the operative nodes 10 connected to them over the network.

In the execution step 300, a command is preferably sent by way of the view node 28' to the selected configuration node 16, in the course of which the view node 28' sends, in a command sending step 310, a command to the selected configuration node 16 to execute the modified and saved network configuration. After the command sending step 310, in a command synchronization step 320 the command received by the selected configuration node 16 is shared such that, based on the new network configuration, all the configuration nodes 16 can commence the assignment of the node configurations to the operative nodes 10. The node configurations are preferably assigned in a configuration assigning step 330, preferably in the configuration assigning step 330 the operative nodes 10 affected by the modified network configuration receive a new node configuration, while the other operative nodes 10 do not receive new node configurations because they are not affected by the changes. Preferably in an execution feedback step 340, the selected configuration node 16 gives feedback to the view node 28' on the result of the execution of the modified network configuration. Subsequently, in a user feedback step 350', via the user's computer 30 connected to the view node 28', the view node 28' informs the user who has modified the network configuration about the result of the execution of the modified network configuration.

Preferably, the communication related to the execution of the modified network configuration carried out between the view node 28' and the selected configuration node 16 is also encrypted, preferably encrypted utilizing an asymmetric key. In contrast to the editing and saving the network configuration, execution is a much more time-critical operation, however, the command issued in the command sending step 310, and the feedback sent in the execution feedback step 340 involve the transmission of only a low amount of data, which allows for quickly performing the asymmetric-key encryption operation.

The security of the system can be further improved if the communication between the view node 28' and the configuration node 16 is also provided with integrity protection, i.e. it is ensured that the information is passed on intact to the receiving party. Thereby, i.e. by simultaneously implementing authentication, encryption, and integrity protection, the trustworthiness of communication can be provided. Authentication is implemented in the system for example by verifying the security certificates corresponding to the operative nodes 10 thereof, and by checking access permissions at the view nodes 28, 28', while encryption is implemented by applying the encryption solution, preferably an asymmetric-key encryption described above in relation to Figs. 5-7. Integrity protection can be implemented by applying any prior art technical solution.

Preferred embodiments are constituted by the combinations of the systems presented in Figs. 1-7, by way of example an implementation of the system wherein the configuration node 16 is in connection also with the version tracking repository 38 and a computing cloud 20.

The manner of industrial application of the invention follows from the characteristics of the technical solution described above. As can be seen from the above, the invention achieves its objectives in a very preferable manner compared to the prior art. The invention is, of course, not limited to the preferred embodiments described in details above, but further variants, modifications and developments are possible within the scope of protection determined by the claims, implemented, for example, by applying network nodes adapted for performing further network roles, or by arbitrary interconnections between the nodes.

## Claims

1. A network-distributed process control system comprising
- operative nodes (10) constituting a network adapted to operate determined by a network configuration, each operative node (10) having a node configuration determining its network role (12), the node configurations altogether constituting the network configuration, and each operative node (10) having at least one redundant counterpart, wherein the operative nodes (10) are created by configuring general-purpose nodes (14), wherein each general-purpose node (14) is configured for a respective network role (12) required for operating as the given operative node (10), and
- a platform software on the general-purpose nodes (14) prepared to perform any of the network roles (12), the software being adapted for automatically receiving, from a configuration node (16), the node configuration to be assigned, and for operating as an operative node (10) based on the received node configuration,
**characterised in that**
- at least two of the operative nodes (10) are configuration nodes (16) that are adapted for storing the network configuration and for assigning the node configurations of the operative nodes (10) connected to them over the network, and are synchronized with each other for identical operation, wherein the at least two configuration nodes (16) constitute redundant counterparts of each other and are operated in master mode,
- the operative nodes (10) other than the configuration nodes (16) are configured either as a data acquisition node (24), a data processing node (26), a view node (28), or an archiving node (36), and
- the system further comprises an operative node (10) configured to allow editing of the network configuration.

2. The system according to claim 1, **characterised in that** the system further comprises a redundant node (18) being an operative node (10) that is configured for replacing the data acquisition node (24), the data processing node (26), the view node (28) and/or the archiving node (36).

3. The system according to claim 2, **characterised in that** the redundant node (18) of the data acquisition node (24), the data processing node (26) and/or the archiving node (36) is a redundant node (18) that is adapted to operate in master mode, and is in synchronized connection with the corresponding data acquisition node (24), data processing node (26) and/or archiving node (36).

4. The system according to any one of claims 1-3, **characterised in that** the operative node (10) that is implemented to allow the editing of the network configuration is configured as a view node (28').

5. The system according to any one of claims 1-4, **characterised in that** each operative node (10) has a single respective network connection to the network from which it is adapted to receive node configuration updates.

6. The system according to any one of claims 1-5, **characterised in that** the operative nodes (10) and the configuration nodes (16) are in a communications connection comprising sending recurring heartbeat messages, the heartbeat message sent by an operative node (10) towards the configuration nodes (16) containing the version number of the current node configuration of the given operative node (10).

7. The system according to any one of claims 1-6, **characterised in that** the network is implemented on one or more devices with computing capacity.

8. The system according to any one of claims 1-7, **characterised in that** it comprises a graphical user interface (42A-42D) that is connected to a view node 28 of the network, and is adapted for providing a network overview, for verifying a status of the operative nodes (10), for identifying failed operative nodes (10), for managing network identifiers of the operative nodes (10) and of the general-purpose nodes (14) connected to the network, for confirming the node configurations received by the operative nodes (10), and/or for initializing the general-purpose nodes (14).

9. The system according to any one of claims 1-8, **characterised in that** the general-purpose nodes (14) are preconfigured, preferably preconfigured with respective static IP addresses.

10. The system according to any one of claims 1-9, **characterised in that** the configuration node (16) is connected to a computing cloud (20) and/or server computer and/or computer cluster with a connection adapted for receiving and storing network data.

11. A method for managing redundancy of configuration nodes (16) in the process control system according to claim 1, **characterised by** comprising
- in an editing step (100), making a network connection to a selected configuration node (16) for editing a network configuration, wherein a connection is made to the selected configuration node (16) via an operative node (10) that is implemented to allow the editing of the network configuration, followed by retrieving and modifying the current network configuration,
- in a saving step (200), saving the modified network configuration and uploading it to the selected configuration node (16),
- in a synchronization step (220), the configuration nodes (16) synchronizing the modified network configuration between themselves, followed by signalling the successful synchronization, and
- in an execution step (300), sending a command to the selected configuration node (16) for applying the modified network configuration, based on which the selected configuration node (16) issues a signal to the other configuration nodes (16) for executing the modified network configuration, and subsequently, utilizing the configuration nodes (16) for assigning the node configurations corresponding to the modified network configuration to the operative nodes (10) connected to them over the network.

12. The method according to claim 11, **characterised in that,** the operative node (10) that is implemented to allow the editing of the network configuration is configured as a view node (28').

13. The method according to claim 12, **characterised in that** in the editing step (100), the selected configuration node (16) verifies, in a verification step (120), the network configuration-editing status of the other configuration nodes (16) of the network, and if there is no other network configuration-editing process underway, then an exclusive network configuration-editing permission is granted by the selected configuration node (16) to the view node (28'), while if there is another network configuration-editing process underway, then no network configuration-editing permission is issued by the configuration nodes (16) until said process has been finished, and in the editing step (100), the selected configuration node (16) sends for editing, in a configuration sending step (140), the network configuration to the view node (28') while granting to it the network configuration-editing permission, followed by, in a saving step (200), returning the issued exclusive network configuration-editing permission to the configuration node (16) while the network configuration is being uploaded.

14. The method according to any one of claims 11-13, **characterised in that** the communication between the view node (28') and the selected configuration node (16) is encrypted, preferably utilizing asymmetric key encryption.

## Patentansprüche

1. Netzwerkverteiltes Prozesssteuerungssystem, aufweisend
- operative Knoten (10), die ein Netzwerk darstellen, welches eingerichtet ist, durch eine Netzwerkkonfiguration bestimmt zu arbeiten, wobei jeder operative Knoten (10) eine Knotenkonfiguration aufweist, die seine Netzwerkrolle (12) bestimmt, wobei die Knotenkonfigurationen insgesamt die Netzwerkkonfiguration darstellen, und wobei jeder operative Knoten (10) zumindest ein redundantes Gegenstück aufweist, wobei die operativen Knoten (10) durch Konfigurieren von Universal-Knoten (14) erzeugt werden, wobei jeder Universal-Knoten (14) für eine jeweilige Netzwerkrolle (12) konfiguriert ist, die zum Betrieb als der gegebene operative Knoten (10) erforderlich ist, und
- eine Plattformsoftware auf den Universal-Knoten (14), die eingerichtet ist, jede der Netzwerkrollen (12) zu übernehmen, wobei die Software zum automatischen Empfangen der zuzuweisenden Knotenkonfiguration von einem Konfigurationsknoten (16) sowie für den Betrieb als operativer Knoten (10) basierend auf der empfangenen Knotenkonfiguration eingerichtet ist,
**dadurch gekennzeichnet, dass**
- zumindest zwei der operativen Knoten (10) Konfigurationsknoten (16) sind, die zum Speichern der Netzwerkkonfiguration und zum Zuweisen der Knotenkonfigurationen der mit ihnen über das Netzwerk verbundenen operativen Knoten (10) eingerichtet sind, und die miteinander zum identischen Betrieb synchronisiert sind, wobei die zumindest zwei Konfigurationsknoten (16) redundante Gegenstücke zueinander darstellen und in einem Master-Modus betrieben werden,
- die operativen Knoten (10), die nicht die Konfigurationsknoten (16) sind, entweder als ein Datenerfassungsknoten (24), ein Datenverarbeitungsknoten (26), ein Ansichtsknoten (28) oder ein Archivierungsknoten (36) konfiguriert sind, und
- das System ferner einen operativen Knoten (10) aufweist, der eingerichtet ist, das Verändern der Netzwerkkonfiguration zu erlauben.

2. System nach Anspruch 1, **dadurch gekennzeichnet, dass** das System ferner einen redundanten Knoten (18) aufweist, welcher ein operativer Knoten (10) ist, der zum Ersetzen des Datenerfassungsknotens (24), des Datenverarbeitungsknotens (26), der Ansichtsknotens (28) und/oder des Archivierungsknotens (36) konfiguriert ist.

3. System nach Anspruch 2, **dadurch gekennzeichnet, dass** der redundante Knoten (18) des Datenerfassungsknotens (24), des Datenverarbeitungsknotens (26) und/oder des Archivierungsknotens (36) ein redundanter Knoten (18) ist, der eingerichtet ist, im Master-Modus zu arbeiten, und in synchronisierter Verbindung mit dem entsprechenden Datenerfassungsknoten (24), Datenverarbeitungsknoten (26) und/oder Archivierungsknoten (36) ist.

4. System nach einem der Ansprüche 1 bis 3, **dadurch gekennzeichnet, dass** der operative Knoten (10), der implementiert ist, um das Verändern der Netzwerkkonfiguration zu erlauben, als ein Ansichtsknoten (28') konfiguriert ist.

5. System nach einem der Ansprüche 1 bis 4, **dadurch gekennzeichnet, dass** jeder operative Knoten (10) eine einzelne jeweilige Netzwerkverbindung zu dem Netzwerk aufweist, von dem er Knotenkonfigurationsaktualisierungen empfangen kann.

6. System nach einem der Ansprüche 1 bis 5, **dadurch gekennzeichnet, dass** die operativen Knoten (10) und die Konfigurationsknoten (16) in einer Kommunikationsverbindung sind, die das Senden wiederkehrender Heartbeat-Nachrichten umfasst, wobei die von einem operativen Knoten (10) hin zu den Konfigurationsknoten (16) gesendete Heartbeat-Nachricht die Versionsnummer der aktuellen Knotenkonfiguration des gegebenen operativen Knotens (10) enthält.

7. System nach einem der Ansprüche 1 bis 6, **dadurch gekennzeichnet, dass** das Netzwerk auf einer oder mehr Vorrichtungen mit Rechenkapazität implementiert ist.

8. System nach einem der Ansprüche 1 bis 7, **dadurch gekennzeichnet, dass** es eine grafische Benutzeroberfläche (42A - 42D) aufweist, die mit einem Ansichtsknoten 28 des Netzwerks verbunden ist, und die zum Bereitstellen einer Netzwerkübersicht zum Verifizieren eines Status der operativen Knoten (10), zum Identifizieren ausgefallener operativer Knoten (10), zum Verwalten von Netzwerkkennungen der operativen Knoten (10) und der Universal-Knoten (14), die mit dem Netzwerk verbunden sind, zum Bestätigen der Knotenkonfigurationen, die von den operativen Knoten (10) empfangen werden, und/oder zum Initialisieren der Universal-Knoten (14) eingerichtet ist.

9. System nach einem der Ansprüche 1 bis 8, **dadurch gekennzeichnet, dass** die Universal-Knoten (14) vorkonfiguriert sind, bevorzugt mit jeweiligen statischen IP-Adressen vorkonfiguriert sind.

10. System nach einem der Ansprüche 1 bis 9, **dadurch gekennzeichnet, dass** der Konfigurationsknoten (16) mit einer Computing Cloud (20) und/oder einem Servercomputer und/oder einem Computercluster mit einer zum Empfangen und Speichern von Netzwerkdaten eingerichteten Verbindung verbunden ist.

11. Verfahren zum Verwalten von Redundanz von Konfigurationsknoten (16) in dem Prozesssteuerungssystem nach Anspruch 1, **dadurch gekennzeichnet, dass** das Verfahren umfasst:
- in einem Veränderungsschritt (100), Herstellen einer Netzwerkverbindung zu einem ausgewählten Konfigurationsknoten (16) zum Verändern einer Netzwerkkonfiguration, wobei eine Verbindung zu dem ausgewählten Konfigurationsknoten (16) über einen operativen Knoten (10) hergestellt wird, der implementiert ist, das Verändern der Netzwerkkonfiguration zu erlauben, gefolgt von Abrufen und Modifizieren der aktuellen Netzwerkkonfiguration,
- in einem Speicherschritt (200), Speichern der modifizierten Netzwerkkonfiguration und Hochladen derselben auf den ausgewählten Konfigurationsknoten (16),
- in einem Synchronisationsschritt (220), Synchronisieren der modifizierten Netzwerkkonfiguration durch die Konfigurationsknoten (16) untereinander, gefolgt von Signalisieren der erfolgreichen Synchronisation, und
- in einem Ausführungsschritt (300), Senden eines Befehls an den ausgewählten Konfigurationsknoten (16) zum Anwenden der modifizierten Netzwerkkonfiguration, worauf basierend der ausgewählte Konfigurationsknoten (16) ein Signal an die anderen Konfigurationsknoten (16) zum Ausführen der modifizierten Netzwerkkonfiguration ausgibt, und anschließend Verwenden der Konfigurationsknoten (16) zum Zuweisen der Knotenkonfigurationen entsprechend der modifizierten Netzwerkkonfiguration zu den operativen Knoten (10), die mit ihnen über das Netzwerk verbunden sind.

12. Verfahren nach Anspruch 11, **dadurch gekennzeichnet, dass** der operative Knoten (10), der implementiert ist, das Verändern der Netzwerkkonfiguration zu erlauben, als ein Ansichtsknoten (28') konfiguriert ist.

13. Verfahren nach Anspruch 12, **dadurch gekennzeichnet, dass** in dem Veränderungsschritt (100) der ausgewählte Konfigurationsknoten (16) in einem Verifizierungsschritt (120) den Netzwerkkonfigurations-Veränderungsstatus der anderen Konfigurationsknoten (16) des Netzwerks verifiziert, und falls kein anderer Netzwerkkonfigurations-Veränderungsprozess im Gange ist, dem Ansichtsknoten (28') eine exklusive Netzwerkkonfigurations-Veränderungserlaubnis durch den ausgewählten Konfigurationsknoten (16) gewährt wird, wohingegen falls ein anderer Netzwerkkonfigurations-Veränderungsprozess im Gange ist, keine Netzwerkkonfigurations-Veränderungserlaubnis von den Konfigurationsknoten (16) ausgegeben wird, bis der Prozess beendet wurde, und in dem Veränderungsschritt (100) der ausgewählte Konfigurationsknoten (16) die Netzwerkkonfiguration in einem Konfigurations-Sendeschritt (140) zum Verändern an den Ansichtsknoten (28') sendet und ihm gleichzeitig die Netzwerkkonfigurations-Veränderungserlaubnis gewährt, gefolgt von, in einem Speicherschritt (200), dem Zurückgeben der ausgegebenen exklusiven Netzwerkkonfigurations-Veränderungserlaubnis an den Konfigurationsknoten (16), während die Netzwerkkonfiguration hochgeladen wird.

14. Verfahren nach einem der Ansprüche 11 bis 13, **dadurch gekennzeichnet, dass** die Kommunikation zwischen dem Ansichtsknoten (28') und dem ausgewählten Konfigurationsknoten (16) verschlüsselt wird, bevorzugt vermittels einer Verschlüsselung mit asymmetrischem Schlüssel.

## Revendications

1. Système de commande de processus distribué par réseau comprenant
- des noeuds fonctionnels (10) constituant un réseau adaptés pour fonctionner déterminés par une configuration de réseau, chaque noeud fonctionnel (10) ayant une configuration de noeud déterminant son rôle de réseau (12), les configurations de noeud constituant ensemble la configuration de réseau, et chaque noeud fonctionnel (10) ayant au moins une contrepartie redondante, dans lequel les noeuds fonctionnels (10) sont créés en configurant des noeuds généraux (14), dans lequel chaque noeud général (14) est configuré pour un rôle de réseau (12) respectif requis pour fonctionner comme noeud fonctionnel (10) donné, et
- un logiciel de plate-forme sur les noeuds généraux (14) préparés pour exécuter n'importe lequel des rôles de réseau (12), le logiciel étant adapté pour recevoir automatiquement, depuis un noeud de configuration (16), la configuration de noeud à affecter, et pour fonctionner comme un noeud fonctionnel (10) sur la base de la configuration de noeud reçue,
**caractérisé en ce que**
- deux au moins des noeuds fonctionnels (10) sont des noeuds de configuration (16) qui sont adaptés pour stocker la configuration de réseau et pour affecter les configurations de noeud des noeud fonctionnels (10) qui leur sont reliés par le réseau, et sont synchronisés entre eux pour un fonctionnement identique, dans lequel les au moins deux noeuds de configuration (16) constituent des contreparties redondantes l'une de l'autre et fonctionnent en mode maître,
- les noeuds fonctionnels (10) autres que les noeuds de configuration (16) sont configurés soit comme un noeud d'acquisition de données (24), un noeud de traitement de données (26), un noeud de vue (28), ou comme un noeud d'archivage (36), et
- le système comprend en outre un noeud fonctionnel (10) configuré pour permettre d'éditer la configuration de réseau.

2. Système selon la revendication 1, **caractérisé en ce que** le système comprend en outre un noeud redondant (18) qui est un noeud fonctionnel (10) configuré pour remplacer le noeud d'acquisition de données (24), le noeud de traitement de données (26), le noeud de vue (28) et/ou le noeud d'archivage (36).

3. Système selon la revendication 2, **caractérisé en ce que** le noeud redondant (18) du noeud d'acquisition de données (24), du noeud de traitement de données (26) et/ou du noeud d'archivage (36) est un noeud redondant (18) qui est adapté pour fonctionner en mode maître, et est en liaison synchronisée avec le noeud d'acquisition de données (24), le noeud de traitement de données (26) et/ou le noeud d'archivage (36) correspondant.

4. Système selon l'une quelconque des revendications 1-3, **caractérisé en ce que** le noeud fonctionnel (18) qui est installé pour autoriser l'édition de la configuration de réseau est configuré comme un noeud de vue (28').

5. Système selon l'une quelconque des revendications 1-4, **caractérisé en ce que** chaque noeud fonctionnel (10) a une seule liaison de réseau respective avec le réseau depuis lequel il est adapté pour recevoir des actualisations de configuration de noeud.

6. Système selon l'une quelconque des revendications 1-5, **caractérisé en ce que** les noeuds fonctionnels (10) et les noeuds de configuration (16) sont dans une liaison de communications comprenant l'envoi de messages battement de coeur récurrents, le message battement de coeur envoyé par un noeud fonctionnel (10) vers les noeuds de configuration (16) contenant le numéro de version de la configuration de noeud actuelle du noeud fonctionnel (10) donné.

7. Système selon l'une quelconque des revendications 1-6, **caractérisé en ce que** le réseau est installé sur un ou plusieurs dispositifs avec une capacité de calcul.

8. Système selon l'une quelconque des revendications 1-7, **caractérisé en ce qu'**il comprend une interface d'utilisateur graphique (42A-42D) qui est reliée à un noeud de vue 28) du réseau, et est adapté pour fournir une vue d'ensemble de réseau, pour vérifier un statut des noeuds fonctionnels (10), pour identifier des noeuds fonctionnels (10) défaillants, pour gérer des identifiants de réseau des noeuds fonctionnels (10) et des noeuds généraux (14) reliés au réseau, pour confirmer les configurations de noeud reçues par les noeuds fonctionnels (10), et/ou pour initialiser les noeuds généraux (14).

9. Système selon l'une quelconque des revendications 1-8, **caractérisé en ce que** les noeuds généraux (14) sont préconfigurés, de préférence préconfigurés avec des adresses IP statiques respectives.

10. Système selon l'une quelconque des revendications 1-9, **caractérisé en ce que** le noeud de configuration (16) est relié à un nuage informatique (20) et/ou à un ordinateur serveur et/ou à un cluster d'ordinateur avec une liaison adaptée pour recevoir et stocker des données de réseau.

11. Procédé pour gérer la redondance de noeuds de configuration (16) dans le système de commande de processus selon la revendication 1, **caractérisé en ce qu'**il comprend
- dans une étape d'édition (100), faire une connexion de réseau avec un noeud de configuration sélectionné (16) pour éditer une configuration de réseau, dans lequel une connexion est faite avec le noeud de configuration sélectionné (16) via un noeud fonctionnel (10) qui est installé pour permettre l'édition de la configuration de réseau, puis récupérer et modifier la configuration de réseau présente,
- dans une étape de sauvegarde (200), sauvegarder la configuration de réseau modifiée et la télécharger dans le noeud de configuration sélectionné (16),
- dans une étape de synchronisation (220), les noeuds de configuration (16) synchronisant entre eux la configuration de réseau modifiée, puis signaler la synchronisation réussie, et
- dans l'étape d'exécution (300), envoyer un ordre au noeud de configuration sélectionné (16) pour appliquer la configuration de réseau modifiée, sur la base de quoi le noeud de configuration sélectionné (16) émet un signal vers les autres noeuds de configuration (16) pour exécuter la configuration de réseau modifiée, et ensuite utiliser les noeuds de configuration (16) pour attribuer les configurations de noeud correspondant à la configuration de noeud modifiée aux noeuds fonctionnels (10) qui leur sont connectés par le réseau.

12. Procédé selon la revendication 11, **caractérisé en ce que** le noeud fonctionnel (10) qui est installé pour permettre l'édition de la configuration de réseau est configuré comme un noeud de vue (28').

13. Procédé selon la revendication 12, **caractérisé en ce que** dans l'étape d'édition (100), le noeud de configuration sélectionné (16) vérifie, dans une étape de vérification (120), le statut d'édition de configuration de réseau des autres noeuds de configuration (16) du réseau, et s'il n'y a pas d'autre processus d'édition de configuration de réseau en cours, alors une permission d'édition de configuration de réseau exclusive est accordée par le noeud de configuration sélectionné (16) au noeud de vue (28'), tandis que s'il y a un autre processus d'édition de configuration de réseau en cours, alors aucune permission d'édition de configuration de réseau n'est délivrée par les noeuds de configuration (16) jusqu'à ce que ledit processus ait été terminé, et dans l'étape d'édition (100), le noeud de configuration sélectionné (16) envoi pour l'édition, dans une étape d'envoi de configuration (140), la configuration de réseau au noeud de vue (28') tout en lui accordant la permission d'édition de configuration de réseau, puis, dans une étape de sauvegarde (200), renvoyer la permission d'édition de configuration de réseau exclusive délivrée au noeud de configuration (16) tandis que la configuration de réseau est en cours de chargement.

14. Procédé selon l'une quelconque des revendications 11-13, **caractérisé en ce que** la communication entre le noeud de vue (28') et le noeud de configuration sélectionné (16) est cryptée, de préférence en utilisant un chiffrement à clé asymétrique.
